# EUROPEAN PATENT SPECIFICATION

(11) **EP 0 751 712 B1**
(45) Date of publication and mention of the grant of the patent: **25.11.1998**
(21) Application number: 95914293.6
(22) Date of filing: 22.03.1995
(51) Int. Cl.: A22C 29/02, A22C 25/12

(54) **A DEVICE AND A METHOD FOR PROCESSING CRUSTACEANS**
VERFAHREN UND VORRICHTUNG ZUM BEHANDELN VON KRUSTENTIEREN
DISPOSITIF ET PROCEDE DE TRAITEMENT DE CRUSTACES

(43) Date of publication of application: 08.01.1997
(73) Proprietor: MEGAPEL B.V., NL-2014 AE Haarlem (NL)
(72) Inventor: DE VRIES, Jacobus Lambertus, 2014 AE Haarlem (NL)
(74) Representative: Louet Feisser, Arnold
(86) International application number: EP9501079
(87) International publication number: WO9526140

(56) References cited:
- DE-A- 1 913 477
- DE-A- 3 535 035
- NL-A- 7 902 171
- US-A- 2 728 455
- US-A- 2 793 734
- US-A- 2 818 160
- US-A- 4 105 108

## Description

The invention relates to a device and a method for positioning crustaceans or parts of crustaceans. The term crustaceans used in the specification or in the claims is also understood to include parts of crustaceans, such as the tail of the nephrops norvegicus.

The invention relates in particular to turning crustaceans to a certain position in order to be able to process these crustaceans. Such a treatment of crustaceans is for example necessary when the crustaceans are to be sorted according to size, whereby generally the width of the crustacean determines its size.

US-A-2,728,455 discloses a device for processing crustaceans, in particular shrimps, which device is provided with guide means and vibrating means which are capable of vibrating the guide means in such a manner as to cause the crustaceans to move over said guide means. The guide means are grader bars which mutually diverge in the direction of movement of the crustaceans. The crustaceans can fall down between the bars at a location depending of its size.

In order to be able to sense the width of the crustaceans automatically, the crustacean needs to be turned to a predetermined position. Also when the flesh is to be separated from the crust parts, it may be necessary to turn the crustaceans to a predetermined position first.

The object of the invention is to provide a treatment of crustaceans, whereby said crustaceans are moved to a predetermined position in an effective manner.

In order to accomplish this objective the device according to the invention is provided with guide means, and vibrating means which are capable of vibrating the guide means in such a manner as to cause the crustaceans to move over said guide means, said guide means being provided with blow nozzles for effecting substantially upward air flows, whereby said crustaceans are turned to a predetermined position. In practice it has become apparent that under the influence of one or more upwardly directed blow nozzles the crustaceans present on a vibrating conveyor are turned over if they are not positioned with their crusts (i.e. their back side crusts) downward.

According to one aspect of the invention said guide means comprise longitudinally extending troughs, which may be made up of horizontally arranged hollow bars, whereby the blow nozzles may be provided on said bars. Air may be supplied through said hollow bars, which air is aimed at the passing crustaceans by the blow nozzles. Eventually the crustaceans will come to lie lengthwise in a trough thereby, with their backs downward.

By designing the bars in such manner as to have a substantially square cross-section, a trough may be formed when the flat sides of two bars positioned side by side are inclined. When blow nozzles are provided in said flat sides, the crustacean is thrown upwards if it is not positioned with its relatively smooth crust downward. Said throwing upwards of the crustaceans is partially effected by the vibrating movement of the trough, which vibration provides the displacement of the crustaceans through the trough.

When a plurality of said bars is arranged in side-by-side relationship, several troughs lying side by side may be formed. When a crustacean is not positioned lengthwise in a trough, but extends in transverse direction, a blow nozzle provided centrally in a bar at the upper side can provide said throwing upwards of such a crustacean, so that it will eventually land lengthwise in a trough, with its crust downward.

According to another aspect of the invention the bottom of a trough may be made up of a round bar, which is provided lengthwise. This round bar may be hollow and contain holes forming blow nozzles at its upper side, so that said blow nozzles effect upward air flows, which cause the crustaceans to be turned over if they are not in their correct position.

According to the invention it will help towards a satisfactory operation of the device when the air which is pressed through the blow nozzles is humidified in advance, for example with water. On the one hand this provides a cooling effect, whilst on the other hand the degree of fouling of the device is reduced.

The invention can in particular be used in a sorting device for sorting crustaceans according to size, which device is provided with a plurality of bars arranged substantially horizontally in side-by-side relationship, over which the crustaceans can be moved by vibration of the bars and whereby the spacing between said bars increases in the direction of displacement of the crustaceans, so that the crustaceans fall down between said bars at a place which depends on the width of said crustaceans. According to the invention the first part of the bars arranged in side-by-side relationship may be provided with blow nozzles thereby. In this way the sorting device is able to sort the crustaceans according to their width in a simple manner, also if another dimension of the crustaceans, for example their thickness, is less than their width.

The invention may also be used in a device for processing crustaceans, whereby the flesh is removed from the crust parts and whereby the crustaceans need to be turned to a predetermined position first. The feeding device of such a machine may be constructed in accordance with the invention.

The invention furthermore relates to a method for processing crustaceans, whereby vibrating guide means cause the crustaceans to move over the guide means and whereby according to the invention said crustaceans are turned over by upward air flows past the crustaceans if the crustaceans are not positioned with their crusts downward. According to another aspect of the invention the air which is blown against the crustaceans may be humidified in advance thereby.

Further aspects of the invention will be mentioned and explained in the description of the Figures and in the claims.

In order to more fully explain the invention an embodiment of a device for moving crustaceans to a predetermined position will be described hereafter with reference to the drawing.
Figure 1 is a plan view of a device for sorting crustaceans;
Figure 2 is a side view of the device according to Figure 1;
Figure 3 shows a part of the device according to Figure 1; and
Figure 4 is a sectional view along the line IV - IV in Figure 3.

The Figures are merely diagrammatic illustrations, wherein like parts are numbered alike.

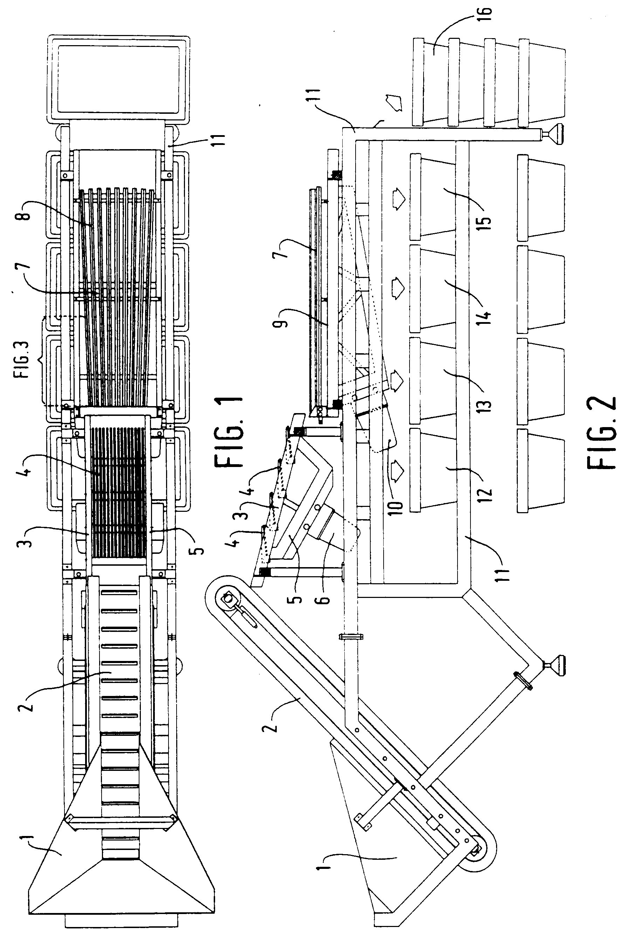

Figures 1 and 2 show a storage container 1, into which crustaceans may be deposited, which will be sorted by means of the device. From the storage container 1 the crustaceans can be transported to a first treatment unit 3 by means of conveyor 2. The first treatment unit 3 consists of four screen decks 4, which are mounted within a frame 5. Each screen deck consists of a plurality of horizontal, spaced-apart bars arranged in side-by-side relationship. The frame 5 with the screen decks 4 can be vibrated by means of a vibrating motor 6, in such a manner that the crustaceans are moved over the screen decks 4. As a result of this the crustaceans are evenly distributed over the width of the device, whilst furthermore contaminations such as dirt and loose crust parts are removed from the flow of crustaceans.

After having passed the screen decks 4 the crustaceans are carried to the sorting unit 7. This sorting unit 7 is provided with a plurality of bars 8 arranged in longitudinal direction in side-by-side relationship, whereby the spacing between said bars slightly increases in the direction of displacement of the crustaceans. The bars 8 are mounted within a frame 9, which is vibrated by means of a vibrating motor 10, in such a manner that the crustaceans move across the sorting unit 7, to the right in Figures 1 and 2. Dependent on its size each crustacean can fall down between the bars 8 at a place where the spacing between the diverging bars 8 is sufficiently large. The crustaceans that fall down in a certain part of the sorting unit are collected in a receiving bin thereby.

Receiving bins 12, 13, 14, 15 may be placed in the frame 11 of the device shown in Figures 1 and 2. Material removed from the flow of crustaceans by the screen decks 4 is caught in the receiving bin 12. Crustaceans which fall down between the bars 8 of the sorting unit are caught in the receiving bins 13, 14, 15. The largest crustaceans are thereby caught in bin 15, because the spacing between the bars 8 is largest there. The crustaceans which are so large that they do not fall down between the bars 8, or which do not lie on the bars 8 in the correct position, or other large objects present in the flow of crustaceans, pass the sorting unit 7 and are discharged to the receiving bin 16. Figure 2 shows several receiving bins, which may be exchanged with the aforesaid receiving bins when the latter are full.

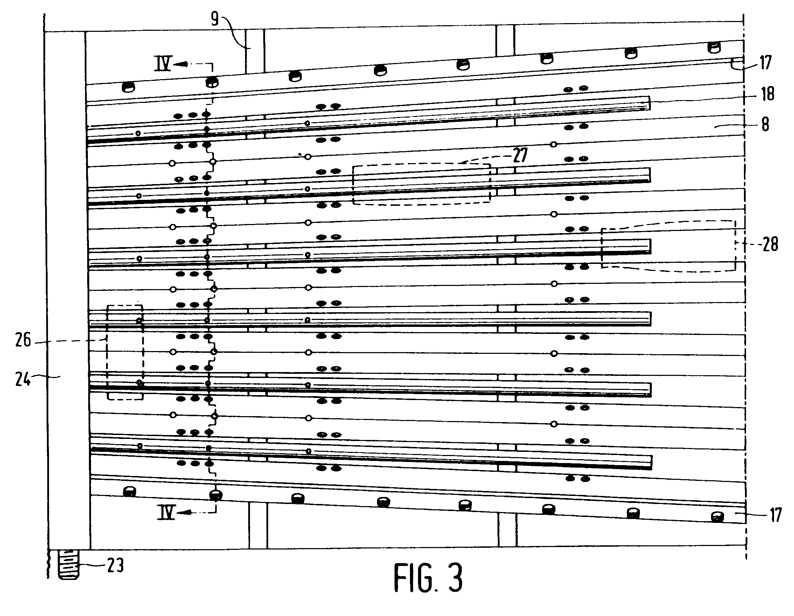

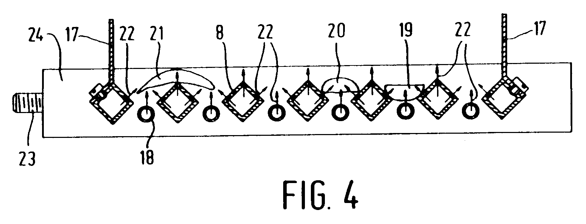

Figure 3 shows a part of the device as shown in Figure 1, whilst Figure 4 shows said part in sectional view. According to these Figures a plurality of hollow bars 8 having a square cross-section are provided in a substantially horizontal plane. In the present embodiment the bars 8 do not extend parallel to each other, but slightly diverge with respect to each other, so that the spacing between the bars 8 increases in one direction (to the right in Figure 3). A side plate 17 is screwed on to each of the outer bars 8, which side plate laterally bounds the path followed by the crustaceans.

The bars 8 extend over the entire sorting unit 7, but only a part of the bars 8 is shown in Figure 3, said part being provided with means for turning the crustaceans to a predetermined position. In this part of the sorting unit 7 round bars 18 are provided between the bars 8, when seen in plan view (Figure 3). The round bars 18 form the bottom of troughs formed between the bars 8. The crustaceans are moved through said troughs by vibrating the entire sorting unit 7.

Figure 4 diagrammatically indicates a few crustaceans 19, 20, 21. Crustacean 19 lies in the desired position thereby, that is in the longitudinal direction of the trough with its backside (the crust) downward. Crustacean 20 on the other hand takes up the reverse position, that is, with its crust upward, which is an undesirable position. Also crustacean 21, which lies in transverse direction, takes up an undesirable position. In practice it has become apparent that crustaceans which do not lie in the desired position can be turned from that position by blowing air against the crustaceans from hollow bars 18, 8. Crustacean 19, which lies in a stable position, will not be moved to another position by said air, whereas crustaceans 20, 21 will land in the same position as crustacean 19. The air flows from the hollow bars 8, 18 are indicated by arrows 22 in Figure 4. For that purpose an air connection 23 is present, through which air can be pressed into the hollow tube 24. The bars 8, 18 are connected to the hollow tube 24 in such a manner that the air can flow from the hollow tube 24 in to the bars 8, 18. Holes, which for example have a diameter of about 1 mm, are provided in the bars 8, 18, said holes functioning as a blow nozzle, through which the air is blown out. Apart from said blowing also the vibrating of the sorting unit by means of the vibrating motor 10 contributes towards the turning of the crustaceans into the desired position.

Figure 3 diagrammatically indicates a few crustaceans 26, 27, 28 by dashed lines. The crustaceans 27, 28 are positioned longitudinal direction thereby, whilst crustacean 26 lies transversely to the bars 8, 18. By passing blow nozzles once or a few times all crustaceans will come to lie in longitudinal direction, in the same position as crustaceans 27, 28, namely on their backs, that is, with their crusts downward.

Preferably humidified air is supplied through connection 23. This prevents desiccation of the crustaceans, whilst moreover fouling of the device is prevented and the device is cooled.

## Claims

1. A device for positioning crustaceans or parts of crustaceans, said device being provided with guide means (8), and vibrating means (10) which are capable of vibrating the guide means (8) in such a manner as to cause the crustaceans to move over said guide means (8), characterized in that said guide means (8) are provided with blow nozzles for effecting substantially upward air flows (22), whereby said crustaceans are turned to a predetermined position.

2. A device according to claim 1, characterized in that said guide means (8) comprise longitudinally extending troughs.

3. A device according to claim 2, characterized in that said troughs are made up of substantially horizontally arranged hollow bars (8), which bars (8) are provided with holes forming blow nozzles.

4. A device according to claim 3, characterized in that said bars (8) have a substantially square cross-section, whereby the flat sides of said bars are inclined.

5. A device according to claim 3 or 4, characterized in that holes are provided in the upper side of said bars (8).

6. A device according to any one of the claims 3 - 5, characterized in that holes are provided in the inclined sides of said bars (8).

7. A device according to any one of the claims 2 - 6, characterized in that the bottom of a trough is made up of a round bar (18), which is provided longitudinal direction.

8. A device according to claim 7, characterized in that said round bar (18) is hollow and contains holes at its upper side, which make up the blow nozzles.

9. A device according to claim any one of the preceding claims, characterized in that means are provided for humidifying the air being pressed through said blow nozzles.

10. A sorting device for sorting crustaceans or parts of crustaceans according to size, provided with a plurality of bars (8) arranged substantially horizontally in side-by-side relationship, over which the crustaceans can be moved by vibration of the bars (8), whereby the spacing between said bars increases in the direction of displacement of the crustaceans, so that the crustaceans fall down between said bars (8) at a place which depends on their size, and whereby the upstream part of said bars is arranged to form a device according to any one of the claims 1 - 9.

11. A feeding device for feeding crustaceans or parts of crustaceans to a processing device, characterized in that said feeding device is provided with a device according to any one of the claims 1 - 9.

12. A device for removing the flesh of crustaceans from the crust parts, whereby said crustaceans are moved to a predetermined position by means of a device according to claim 11.

13. A method for positioning crustaceans or parts of-crustaceans, whereby vibrating guide means (8,18) cause the crustaceans to move over the guide means (8,18) and air is caused to flow upwards past crustaceans on the guide means (8,18) whereby crustaceans which are not positioned with their back side crusts downward are turned over by upward air flows (22) if the crustaceans are not positioned with their back side crusts downward.

14. A method according to claim 13, characterized in that the air is humidified before being blown against the crustaceans.

## Patentansprüche

1. Eine Einrichtung zum Positionieren von Krustentieren oder Teilen von Krustentieren, besagte Einrichtung ist mit Führungsmitteln (8) ausgestattet sowie mit Vibrationsmitteln (10), die in der Lage sind, die Führungsmittel so in Schwingungen zu versetzen, daß die Krustentiere über die Führungsmittel (8) bewegt werden, dadurch gekennzeichnet, daß besagte Führungsmittel (8) mit Blasdüsen ausgestattet sind zur Erzeugung von im wesentlichen aufwärtsgerichteten Luftströmen (22), wodurch besagte Krustentiere in eine vorbestimmte Position gedreht werden.

2. Eine Einrichtung gemäß Anspruch 1, dadurch gekennzeichnet, daß besagte Führungsmittel (8) sich in Längsrichtung erstreckende Rinnen umfassen.

3. Eine Einrichtung gemäß Anspruch 2, dadurch gekennzeichnet, daß besagte Rinnen durch im wesentlichen horizontal angeordnete hohle Stangen (8) gebildet werden und daß die Stangen Löcher aufweisen, die als Blasdüsen dienen.

4. Eine Einrichtung gemäß Anspruch 3, dadurch gekennzeichnet, daß besagte Stangen (8) einen im wesentlichen quadratischen Querschnitt aufweisen und daß die flachen Seiten der besagten Stangen geneigt verlaufen.

5. Eine Einrichtung gemäß Anspruch 3 oder 4, dadurch gekennzeichnet, daß Löcher in den oberen Seiten der besagten Stangen (8) angeordnet sind.

6. Eine Einrichtung gemäß einem der Ansprüche 3 - 5, dadurch gekennzeichnet, daß Löcher in den geneigten Seiten der besagten Stangen (8) angeordnet sind.

7. Eine Einrichtung gemäß einem der Ansprüche 3 - 6, dadurch gekennzeichnet, daß die Unterseite einer Rinne durch eine in Längsrichtung verlaufende runde Stange (18) gebildet wird.

8. Eine Einrichtung gemäß Anspruch 7, dadurch gekennzeichnet, daß besagte runde Stange (18) hohl ist und auf ihrer Oberseite Löcher aufweist, die als Blasdüsen dienen.

9. Eine Einrichtung gemäß einem der vorausgehenden Ansprüche, dadurch gekennzeichnet, daß Mittel vorgesehen sind zur Befeuchtung der Luft, die durch besagte Blasdüsen gepreßt wird.

10. Eine Sortiereinrichtung zum Sortieren von Krustentieren oder Teilen von Krustentieren entsprechend ihrer Größe, ausgestattet mit einer Vielzahl von im wesentlichen horizontal nebeneinander angeordneten Stangen (8), über die die Krustentiere durch Vibration der Stangen (8) bewegt werden können, wobei sich der Abstand zwischen den Stangen in Richtung der Bewegung der Krustentiere vergrößert, so daß die Krustentiere an einem Ort zwischen den Stangen (8) hindurchfallen, der von ihrer Größe abhängt, und wobei der obere Teil der besagten Stangen angeordnet ist zur Bildung einer Einrichtung entsprechend einem der Ansprüche 1 - 9.

11. Eine Vorschubeinrichtung zum Zuführen von Krustentieren oder Teilen von Krustentieren zu einer Verarbeitungseinrichtung, dadurch gekennzeichnet, daß besagte Vorschubeinrichtung mit einer Einrichtung entsprechend einem der Ansprüche 1 - 9 ausgestattet ist.

12. Eine Einrichtung zum Entfernen des Fleisches von Krustentieren von den Krustenteilen, wobei besagte Krustentiere in eine vorbestimmte Position bewegt werden mittels einer Einrichtung gemäß Anspruch 11.

13. Ein Verfahren zum Positionieren von Krustentieren oder Teilen von Krustentieren, wobei vibrierende Führungsmittel (8,18) die Krustentiere veranlassen, sich über Führungsmittel (8,18) zu bewegen und Luft aufwärts an den Krustentieren auf den Führungsmitteln (8,18) vorbei geleitet wird, wodurch Krustentiere, die nicht mit ihren Rückseiten auf nach unten positioniert sind, durch den aufwärts gerichteten Luftstrom (22) umgedreht werden, wenn die Krustentiere nicht mit ihren rückseitigen Krusten nach unten positioniert sind.

14. Ein Verfahren nach Anspruch 13, dadurch gekennzeichnet, daß die Luft befeuchtet wird bevor sie gegen Krustentiere geblasen wird.

## Revendications

1. Dispositif pour le positionnement de crustacés ou de parties de crustacés, ledit dispositif comportant des moyens de guidage (8) et des moyens vibrants (10) qui sont capables de faire vibrer les moyens de guidage (8), de façon à provoquer le déplacement des crustacés par-dessus lesdits moyens de guidage (8), caractérisé en ce que lesdits moyens de guidage (8) comportent des buses de soufflage pour produire des écoulements d'air essentiellement vers le haut (22), grâce à quoi lesdits crustacés sont tournés vers une position prédéterminée.

2. Dispositif selon la revendication 1, caractérisé ce que lesdits moyens de guidage (8) comprennent des bacs s'étendant longitudinalement.

3. Dispositif selon la revendication 2, caractérisé en ce que lesdits bacs sont constitués de barres creuses (8) disposées essentiellement horizontalement, lesquelles barres (8) comportent des trous formant buses de soufflage.

4. Dispositif selon la revendication 3, caractérisé en ce que lesdites barres (8) ont une section transversale sensiblement carrée, tandis que les côtés plats desdites barres sont inclinés.

5. Dispositif selon la revendication 3 ou 4, caractérisé en ce que des trous sont prévus dans le côté supérieur desdites barres (8).

6. Dispositif selon l'une quelconque des revendications 3 à 5, caractérisé en ce que des trous sont prévus dans les côtés inclinés desdites barres (8).

7. Dispositif selon l'une quelconque des revendications 2 à 6, caractérisé en ce que le fond d'un bac est constitué d'une barre ronde (18), laquelle est dirigée dans la direction longitudinale.

8. Dispositif selon la revendication 7, caractérisé en ce que ladite barre ronde (18) est creuse et présente des trous sur son côté supérieur qui constituent les buses de soufflage.

9. Dispositif selon l'une quelconque des revendications précédentes, caractérisé en ce que des moyens sont prévus pour humidifier l'air en étant pressés à travers lesdites buses de soufflage.

10. Dispositif de triage pour le triage de crustacés ou de parties de crustacés selon la dimension, comportant une pluralité de barres (8) disposées essentiellement horizontalement en relation côte à côte, par-dessus lesquelles les crustacés peuvent être déplacés sous l'effet de la vibration des barres (8), dans lequel l'espacement entre lesdites barres augmente dans la direction de déplacement des crustacés, de sorte que les crustacés tombent entre lesdites barres (8) à un emplacement qui dépend de leur dimension, et dans lequel la partie amont desdites barres est disposée de façon à former un dispositif conforme à l'une quelconque des revendications 1 à 9.

11. Dispositif d'approvisionnement pour approvisionner des crustacés ou des parties de crustacés à un dispositif de traitement, caractérisé en ce que le dispositif d'approvisionnement comporte un dispositif selon l'une quelconque des revendications 1 à 9.

12. Dispositif pour retirer la chair des crustacés des parties de carapace, dans lequel lesdits crustacés sont déplacés vers une position prédéterminée au moyen d'un dispositif conforme à la revendication 11.

13. Procédé pour positionner des crustacés ou parties de crustacés, dans lequel des moyens de guidage vibrants (8, 18) provoquent le déplacement des crustacés par-dessus les moyens de guidage (8, 18), et dans lequel de l'air est amené à s'écouler vers le haut, à travers les crustacés sur les moyens de guidage (8, 18), grâce à quoi les crustacés qui ne sont pas positionnés avec leur coté dorsal de carapace vers le bas sont retournés par les courants d'air (22) dirigés vers le haut, si les crustacés ne sont pas positionnés avec le côté de leurs carapaces dorsales tourné vers le bas.

14. Procédé selon la revendication 13, caractérisé en ce que l'air est humidifié avant d'être soufflé contre les crustacés.
